Europäisches Patentamt

European Patent Office

Office européen des brevets

(19)

(11) EP 0 579 047 B1

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(51) Int. Cl.$^6$: **B29C 70/02**

(21) Anmeldenummer: **93110511.8**

(22) Anmeldetag: **01.07.1993**

(54) **Verfahren zur Herstellung von faserverstärkten Halbzeug aus mittel- bis hochviskosen Thermoplasten**

Method for production of fiber reinforced semi-finished products of medium to high viscosity thermoplastics

Procédé de fabrication de semi-produits en résines thermoplastiques de moyenne ou haute viscosité

(84) Benannte Vertragsstaaten:
**BE CH DE FR GB IT LI SE**

(30) Priorität: **15.07.1992 DE 4223241**

(43) Veröffentlichungstag der Anmeldung:
**19.01.1994 Patentblatt 1994/03**

(73) Patentinhaber: **Ticona GmbH
65926 Frankfurt am Main (DE)**

(72) Erfinder:
• **Heckel, Horst
D-6100 Darmstadt (DE)**
• **Skaletz, Detlef, Dr.
D-6500 Mainz (DE)**
• **Wagner, Bruno
D-6259 Oberbrechen (DE)**
• **Heydweiller, Joachim
D-6090 Rüsselsheim (DE)**

(56) Entgegenhaltungen:
EP-A- 0 056 703     EP-A- 0 117 098
EP-A- 0 287 427     EP-A- 0 364 828
EP-A- 0 364 829     EP-A- 0 415 517

• **Proceedings ANTEC '91 pages 2047 - 2052 P.J. Bates, J.-M. Charrier T. Johnson, G. Zanella: "Pulling Tension Monitoring in Thermoplastic Pultrusion Prepregging/Compounding"**

**Beschreibung**

Die Erfindung betrifft die Herstellung eines faserverstärkten Verbundmaterials, bei dem eine Vielzahl von Endlosfäden durch eine Schmelze eines thermoplastischen Polymeren benetzt wird, das bei der Verarbeitung eine Schmelzviskosität von > 100 Ns/m$^2$ und maximal 2.500 Pa · s aufweist.

Nach dem Verfahren der EP-PS 56703 (ICI) wird durch einen Pultrusionsprozeß ein faserverstärkter, in der Hitze verformbarer Verbundwerkstoff gewonnen, der thermoplastisches Polymer und mindestens 30 Vol.-% parallel ausgerichtete Verstärkungsfäden enthält. Das Verfahren soll es ermöglichen, konventionelle thermoplastische Werkstoffe mit hohem Molekulargewicht zum Imprägnieren von Fasersträngen einzusetzen. Das Verfahren eignet sich jedoch nicht mehr für Polymere, die bei der Verarbeitungstemperatur eine hohe Viskosität (oberhalb 100 Ns/m$^2$) aufweisen, weil eine Benetzung von Fasersträngen mit solchen Schmelzen im Pultrusionsprozeß nicht mehr möglich ist (vgl. a. a. O. S. 3, Zeile 10). Deshalb werden Polymere mit sehr kleinen Ausgangsmolmassen eingesetzt, so daß eine Verwendung als Recyclat nicht aussichtsreich erscheint.

Die EP-A-364 829 (Bayer) beschreibt ein Verfahren zur Herstellung eines faserverstärkten Verbundmaterials, bei dem die Verstärkungsfasern bei erhöhtem Druck auf größerer, definierter Länge durch die Schmelze eines thermoplastischen Kunststoffs geführt werden. Dieses Verfahren soll es ermöglichen, die Verstärkungsfasern schonend, d.h. ohne hohe Abzugskräfte, zu imprägnieren. Allerdings können dabei die Verstärkungsfasern im fertigen Verbundwerkstoff ungleichmäßig verteilt sein. Z.B. können sie in den Randbereichen in einem größeren Anteil vorhanden sein als in anderen Bereichen des Werkstoffs (vgl. a. a. O. S. 3, Zeilen 48-51). Andererseits ermöglicht das Verfahren die Verarbeitung von spröden oder dehnbaren Fasern. Der Gehalt an Verstärkungsfasern im fertigen Erzeugnis liegt bei 20 bis 85 Vol.-%.

Andere Verfahren beschreiben eine Imprägnierung in offenen, nicht luftdicht abgeschlossenen Systemen, bei hohen Temperaturen, die eine starke thermooxidative Schädigung des Polymeren hervorrufen oder nur sehr geringe Produktionsgeschwindigkeiten ermöglichen. Hierdurch werden sehr kostenintensive Werkstoffe hergestellt.

Es bestand daher die Aufgabe, ein Verfahren anzugeben, das die Herstellung von thermoformbaren Halbzeugen aus mittel- bis höherviskosen Thermoplasten gestattet. Solche Thermoplaste sind z.B. Polypropylen, Polyamide, Polyoxymethylen, Polyethylen, Polyurethan, Polyphenylensulfid, Polyester, Polycarbonat, Polyaryletherketone und Mischungen hiervon mit entsprechendem Molekulargewicht. Dabei sollte eine möglichst vollständige Benetzung der Verstärkungsfasern, wie Glas-, Kohlenstoff-, Aramid-, Stahl-, Keramik- und/oder sonstige hinreichend temperaturbeständige polymere Fasern sichergestellt sein. Die hohe Viskosität der Schmelze ist ein Merkmal von Produkten mit hohem Molekulargewicht. Das hohe Molekulargewicht verbessert das Recyclierverhalten, weil man sich bei erneutem (wiederholten) Aufschmelzen trotz oxidativem und thermischem Abbau der Schmelze noch im Bereich hoher Molekulargewichte befindet.

Die vorliegende Erfindung löst diese Aufgabe.

Es wurde nun ein Verfahren zur Herstellung eines faserverstärkten Verbundmaterials gefunden, bei dem man eine Vielzahl von Endlosfäden mit Einzelfilament-Durchmessern von 7 bis 30 Mikrometern, zur Bildung eines Bandes parallel anordnet und spannt, das Fadenband mit aufgeschmolzenem, thermoplastischen Polymer in einem Schmelz-Pultrusionsverfahren benetzt, wobei man das Fadenband über mindestens zwei beheizte Spreizeroberflächen zieht und man im erstarrenden Fadenband einen Volumenanteil an 5 bis 70 Vol.-% an Endlosfäden einstellt. Das Verfahren ist dadurch gekennzeichnet, daß die Schmelze, gemessen bei niedrigen Schergeschwindigkeiten, eine Viskosität von 105 bis 2.500 Ns/m$^2$ (= Pa.s) aufweist, die Zugspannung beim Einlaufen in die erste Spreizeroberfläche 5 N bis 50 N pro 4.000 Einzelfilamente und die Geschwindigkeit des Fadenbandes mindestens 3 m/min beträgt. Vorzugsweise liegt die Viskosität der Schmelze im Bereich von 130 - 2000 Pa · s, insbesondere 130 - 500 Pa · s. Die Einzelfilament-Durchmesser der Endlosfäden liegen vorzugsweise im Bereich von 7 bis 24 µm. Der Volumenanteil an Endlosfäden liegt vorzugsweise bei 15 bis 50 Vol.-%.

Es hat sich gezeigt, daß mit steigender Viskosität der Schmelze auch die erforderliche Fadenvorspannung angehoben werden muß. Diese beträgt bei einer Viskosität von 105 Pa · s mindestens 5 N. Sie steigt ferner mit der Filamentoberfläche des Fadenstranges. Die Zugspannung beim Abziehen des imprägnierten Fadenbandes von der letzten Spreizeroberfläche ist höher als die Zugspannung beim Einlaufen in die erste Spreizeroberfläche und beträgt vorzugsweise mindestens 50 N pro 4000 Einzelfilamente.

Aus Beispiel 49 der EP-PS 56703 ist bereits bekannt, daß die Spannung, mit der das imprägnierte Faserband aus einer Schmelze von 20 Ns/m$^2$ (und damit von der Spreizeroberfläche) gezogen wird, etwa 3,8 kg (für einen Strang von 6.000 Filamenten) betragen soll. Erfindungsgemäß ist diese Abzugspannung, d.h. die Zugspannung beim Einlaufen in die erste Spreizeroberfläche wesentlich höher. Bevorzugt sind Abzugsspannungen im Bereich von 20 bis 80 % der Reißfestigkeit des unbenetzten Fadenbandes.

Es ist ein Vorteil des erfindungsgemäßen Verfahrens, daß es sehr hohe Imprägnier-Geschwindigkeiten gestattet. Imprägniergeschwindigkeiten von 3 - 40 m/min, vorzugsweise im Bereich von 10 - 30 m/min, insbesondere 10 - 20 m/min, sind aus wirtschaftlichen Gründen bevorzugt.

Dennoch läßt sich mit dem erfindungsgemäßen Verfahren eine hervorragende Benetzung des Fasermaterials erreichen. Durch Röntgenbeugungsuntersuchungen läßt sich nachweisen, daß beim erfindungsgemäßen Verfahren der Anteil freier Fasern, d.h. von nichtbenetzten Faseroberflächen, unter 25 % liegt. Die Bestimmung der Dichte des Halbzeugs und des Biegemoduls deutet ebenfalls auf eine hohe Benetzung.

Dagegen wird in den Beispielen von EP 056703 mit erheblich niedrigeren Imprägniergeschwindigkeiten von 0,2 - 0,6 m/min gearbeitet, obwohl die Viskosität der Imprägnierschmelze erheblich niedriger, z. B. bei 10 Pa·s liegt, was die Benetzung des Fasermaterials erleichtern sollte.

Es ist überraschend, daß unter Verwendung hochviskoser Schmelzen überhaupt eine so gute, nicht für möglich gehaltene Benetzung des Fasermaterials gelingt.

Insbesondere ist überraschend, daß dies mit Imprägniergeschwindigkeiten gelingt, die deutlich über denen gemäß EP 056703 für niedrig-viskoses Material liegen.

Das der Erfindung zugrundeliegende Prinzip ist noch unklar. Es beruht möglicherweise darauf, daß sich durch die Erhöhung der Spannung aus der die Filamente begleitenden Schlepp-Strömung in der Nähe der Krümmungen der Spreizeroberflächen hydrodynamische Keile ausbilden, die eine Strömung durch das Filamentbündel erzwingen. Es ist nämlich günstig, wenn die Geometrie der Spreizeroberflächen so ausgestattet ist, daß die durch Spreizeroberflächen und einlaufendes Band definierten Zwickel mit Schmelze gefüllt sind und die Faserbündel nicht in direktem Kontakt mit der Förderöffnung für die Schmelze gebracht werden. Die Zuführung der Schmelze kann an einer beliebigen Stelle der vorzugsweise wellenförmig ausgebildeten Imprägniervorrichtung erfolgen, vorausgesetzt, daß die Fasern diese Stelle nicht berühren. Durch die erzeugte Schlepp- und überlagerte Druckströmung in der Imprägniervorrichtung entsteht zwischen letzter Spreizeroberfläche und Austrittsöffnung der Imprägniervorrichtung im allgemeinen ein Druck von mindestens 1,5 bar, der stets für eine vollständige Füllung der Imprägniervorrichtung sorgt.

Das erfindungsgemäße Verfahren ist insofern überraschend, als nicht zu erwarten war, daß so hohe Zugspannungen der Fasern und der fehlende Kontakt zwischen Fasern und Förderöffnung für die Schmelze es gestatten, derart hochviskose Polymer einzusetzen und damit eine so hohe Imprägniergüte zu erzielen. Insbesondere ist überraschend, daß auf diese Weise sehr viel höhere Imprägniergeschwindigkeiten erreicht werden können.

Der Volumenanteil an Fasern im Halbzeug kann durch Einstellen der Förderrate der Polymerschmelze in Relation zur Filamentgeschwindigkeit beeinflußt werden. Ferner können durch Lochbleche überflüssige Anteile von Polymerschmelze abgestreift werden.

Die beim erfindungsgemäßen Verfahren benötigten parallel unidirektional orientierten Verstärkungsfäden, die aus vielen Filamenten bestehen, werden von Faserspulen (Rovings) unter Regelung der Abzugskraft abgespult. Diese Regelung kann mechanisch, mechanisch-physikalisch, elektrisch oder elektronisch erfolgen. Üblicherweise liegt diese direkt aufgebrachte Abzugsvorspannung im Bereich von 10 N bis etwa 25 N, je nach Art der verwendeten Rovings und Stärke der Fasern.

Es hat sich herausgestellt, daß die einmal eingestellte Abzugsspannung vorteilhafterweise möglichst konstant gehalten werden soll.

Eine Apparatur, die sich u.a. dazu eignet, um auf mechanische Weise die Abzugsspannung konstant zu halten, ist Gegenstand des deutschen Gebrauchsmusters 9 107 510.6 (Bolenz & Schäfer Maschinenfabrik GmbH).

Die Vorspannung kann, falls erforderlich, durch Einfügen von einem oder mehreren weiteren Spannstabpaaren zwischen Spule und Imprägniervorrichtung weiter erhöht werden. Dabei bleibt die zeitliche als auch die Roving-abhängige Konstanz der Vorspannung gewährleistet.

Durch die Anzahl, den Durchmesser und die den Umschlingungswinkel bestimmende Position der Spannstäbe läßt sich die zum Transport der Filamente benötigte Abzugsspannung in weiten Grenzen verändern. Dabei steigt die Spannung ausgehend von der Spule in Richtung Bremssystem, Leitorgan/Kämmen bis zu den Umlenkstäben vor der 1. Spreizeroberfläche immer weiter an. Nach Benetzen des Fadens nimmt (in Richtung Aufwickelspule für Verbundmaterial) die Spannung weiter zu.

Die so parallel ausgerichteten und vorgespannten Fasern laufen nun in die Imprägniervorrichtung, insbesondere einer Imprägnierdüse ein. Zur Beschleunigung des Durchsatzes können die Fasern vorgeheizt werden. Dabei haben sich Temperaturen bis 100 K unter bzw. über der Verarbeitungstemperatur der Schmelze bewährt. Das Aufheizen der Filamente kann durch Infrarot-, Kontakt-, Strahlungs-, Dampf-, Wasser- oder Heißgasvorwärmung erfolgen.

Vorrichtungen mit Spreizeroberflächen zur Imprägnierung von Fasermaterial sind bekannt. Aus US-PS 4439387 ist eine Extruder-Apparatur bekannt, bei der mehrere Faserstränge an unterschiedlichen Stellen, die in Transportrichtung der Masse hintereinander angeordnet sind, in das mit Polymerschmelze gefüllte Innere der Apparatur eingezogen und dort mit Schmelze imprägniert werden. Die Spreizeroberflächen 212, 214 und 216 sollen dabei die Benetzung der Faserstränge mit Schmelze verbessern.

Eine Apparatur, die sich gut zur Durchführung des erfindinngsgemäßen Verfahrens eignet, ist in US-PS 4 957 422 beschrieben. Auf die in Fig. 1 dargestellte Schikane (b) im Einlaufteil (1) der Apparatur (vor Benetzen mit Schmelze) kann beim erfindinngsgemäßen Verfahren verzichtet werden.

Die verwendete Imprägniervorrichtung ist vorzugsweise im wesentlichen geschlossen, so daß der Zutritt von Luftsauerstoff und die damit verbundene thermooxydative Schädigung des Polymers klein gehalten werden kann. Innerhalb der Imprägniervorrichtung werden die Fasern vorzugsweise über mindestens drei Spreizeroberflächen gezogen. Diese sind wellenförmig ausgebildet.

Mit einer breiten Imprägnierdrüse kann man eine Vielzahl von einzelnen Fadenbändern gewinnen. Bei Verwendung einer Breitschlitzdüse kann man auch die Gesamtheit der benetzten Fadenbänder zu einem einzigen Band kombinieren und dieses anschließend einem Glättwalzwerk zuführen. Die Breitschlitzdüse kann z.B. Schlitzhöhen zwischen 0,15 - 5, insbesondere 0,4 - 2 mm aufweisen. Die Teilstränge können durch kontrollierte Walzensysteme geformt werden und z.B. einen rechteckigen, elliptischen oder kreisförmigen Querschnitt erhalten.

Herstellbar sind Halbzeuge in Form von endlosen, breiten Bändern (Tapes) bis zu 500 mm, bevorzugt 100 bis 320 mm und Dicken zwischen 0,2 und 0,7 mm, weiterhin Profile in einem weiten Abmessungsbereich (flach 25 x 0,25 mm, 5 x 0,4 mm, 3,5 x 0,8 mm usw., Rundprofile bis zu Durchmessern von etwa 5 mm) ein- oder mehrsträngig gefahren, oder Stränge mit Durchmessern bis zu 5 mm, die anschließend zu Längenabschnitten (Pellets) von 3 bis 100 mm, bevorzugt 10 bis 50 mm geschnitten werden können. Auch diese Stränge sind als einzelnes Halbzeug oder in einer Anzahl bis zu 150 Strängen parallel und simultan herstellbar. Die Erfindung wird durch die Beispiele näher erläutert.

Beispiel 1

Ein Fadenband aus Glasfaser (E-Glas OCF 157) wurde mit einer hohen Zugspannung (15 N/4000 Einzelfäden, beim Einlaufen in erste Spreizeroberfläche gemessen) mit geschmolzenen Polypropylen (= PP) mit einer Viskosität von 370 Pa·s pultrudiert (Geschwindigkeit des Fadenbandes 3,3 m/min). Das erhaltene Verbundmaterial hatte ein Gewicht von 4,420 g/m. Durch Veraschung ergab sich ein Glasgehalt von 47,3 Gew.-%. Daraus errechnet sich ein Gehalt von 2,330 g/m PP und 2,090 g/m Glas. Das hydrostatisch bestimmte Volumen des Verbundmaterials betrug 3,451 cm$^3$/m. Daraus und aus dem Gewicht pro m errechnet sich eine Dichte des Verbundmaterials von 1,281 g/cm$^3$. Die Dichte des PP beträgt 0,907 g/cm$^3$, die des Glases 2,588 g/cm$^3$.

Die Porosität wird nach der Formel

$$\text{Vol-\% Poren} = 100 \cdot (1 - Gg/dg + Gp/dp) : V$$

errechnet.

Dabei bedeutet

Gg = Gewicht Glasanteil/m

dg = Dichte Glas
Gp = Gewicht Polymeranteil/m
dp = Dichte Polymer
V = Volumen/m

Im Beispiel errechnet sich die Porosität zu 2,15 Vol-%.

Bei einem Vergleichsversuch mit unveränderter Zuführung von PP-Schmelze und Fadenmaterial wurde die Zugspannung auf ca. 5 N/Strang verringert. Das erhaltene Verbundmaterial hatte ein Gewicht von 4,214 g/m. Durch Veraschung ergab sich ein Gehalt von 49,2 Gew.-% Glas. Das hydrostatisch bestimmte Volumen des Verbundmaterials betrug 3,379 cm$^3$/m. Daraus errechnet sich eine Porosität von 6,45 Vol-%.

Wie der Vergleich zeigt, erlaubt die Bestimmung des Stranggewichts (längenbezogene Masse) alleine keine zuverlässige Bestimmung des Porenvolumens. Durch die Verringerung der ursprünglich hohen Abzugspannung steigt die unerwünschte Porosität etwa um den Faktor 3.

Beispiel 2

In einer Pultrusionsanlage wird Polypropylen mit einem Melt Flow-Index von 12 (230/2,16) und einer Viskosität von 370 Pa·s (gemessen bei 285°C) aufgeschmolzen und auf einen gleichmäßig abgezogenen Glasfaserstrang aufgepreßt. Durch die Formgebung des Mundstücks wird ein ovaler Querschnitt (Breite ca. 3,47 mm, Dicke ca. 2,59 mm) erzeugt. Die Temperatur der PP-Schmelze gemessen am Mundstück der Apparatur betrug 278°C. Die Liniengeschwindigkeit des pultrutierten Stranges beträgt 9,88 m/min., die Vorspannung 20 N. Der erhaltene Faserstrang wird in ca. 14 cm lange Stücke zerschnitten. An diesen Abschnitten werden in Anlehnung an ASTM D790-80 Biegeversuche gemacht. Die Abschnitte weisen eine maximale Biegespannung von 181 ± 19 MPa und einen E-Modul (gemessen bei 0,05 bis 1,0% ε) von 7.000 ± 800 MPa auf.

Wird dagegen bei dem gleichen Versuch die Vorspannung bei der Herstellung des pultrudierten Stranges auf 5 N verringert, so zeigen analoge Probeabschnitte nur eine maximale Biegespannung von 110 ± 41 MPa und einen E-Modul von 5.900 ± 2430 MPa.

Beispiel 3

In einer Pultrusionsanlage wird Polypropylen mit einem Melt Flow-Index von 12 (230/2, 16) und einer Viskosität von 370 Pa·s aufgeschmolzen und auf einen gleichmäßig abgezogenen Glasfaserstrang aufgepreßt. Durch die Formgebung des Mundstücks wird ein rechteckiger Querschnitt von 5 x 0,4 mm erzeugt. Die Temperatur der PP-Schmelze gemessen am Mundstück der Apparatur betrug 282°C. Die Liniengeschwindigkeit des pultrudierten Stranges betrug 27 m/min, die Vorspannung 20 N. Die Zugfestigkeit der so hergestellten Profile in Anlehnung an DIN 53 455 ermittelt, beträgt 945 MPa und der Zug-E-Modul 36,1 GPa.

## Patentansprüche

1. Verfahren zur Herstellung eines faserverstärkten Verbundmaterials, bei dem in einer Imprägniervorrichtung zur Bildung eines Fadenbandes eine Vielzahl von Endlosfäden mit Einzelfilamentdurchmessern von 7 bis 30 Mikrometer parallel angeordnet und gespannt werden, das Fadenband über mindestens zwei beheizte Spreizeroberflächen gezogen wird, beim Einlaufen in die erste Spreizeroberfläche das Fadenband eine Zugspannung von 5 N bis 50 N pro 4000 Einzelfilamente aufweist und die Geschwindigkeit des Fadenbandes mindestens 3 m/min beträgt, eine thermoplastische Polymerschmelze, die gemessen bei niedrigen Schergeschwindigkeiten eine Viskosität von 105 bis 2500 Pa • s aufweist, durch eine Förderöffnung in die Vorrichtung zugeführt wird und im erstarrenden Fadenband ein Gehalt an Endlosfäden von 5 bis 70 Vol.-% eingestellt wird, dadurch gekennzeichnet, daß die Geometrie der Spreizeroberflächen so ausgestaltet ist, daß sie mit dem einlaufenden Fadenband Zwickel bilden, die Förderöffnung für die Schmelze und die Endlosfäden nicht in Kontakt miteinander stehen und das gezogene Fadenband, das mit der Schmelze in Kontakt gebracht wird, die Schmelze in die Zwickel drückt, wobei durch die Spannung und die Geschwindigkeit des Bandes die Schmelze durch das Band gepreßt wird.

2. Verfahren nach Anspruch 1, dadurch gekennzeichnet, daß die Zugspannung beim Abziehen des imprägnierten Fadenbandes von der letzten Spreizeroberfläche mindestens 50 N pro 4000 Einzelfilamente beträgt.

## Claims

1. A process for the production of a fiber-reinforced composite material in which, in an impregnation apparatus in order to form a filament band, a multiplicity of continuous filaments having single-filament diameters of 7 to 30 micrometers are arranged in parallel and tensioned, the filament band is pulled over at least two heated spreader surfaces, the filament band entering the first spreader surface has a tension of 5 N to 50 N per 4000 single filaments and the speed of the filament band is at least 3m/min, a thermoplastic polymer melt which, measured at low shearing rates, has a viscosity of 105 to 2500 Pa • s is fed into the apparatus through a conveying opening and the continuous-filament content of the solidifying filament band is set at 5 to 70% by volume, characterized in that the geometry of the spreader surfaces is such that they form nips with the incoming filament band, the conveying opening for the melt and the continuous filaments are not in contact with one another and the pulled filament band, which is brought into contact with the melt, presses the melt into the nips, the melt being forced through the band by the tension and the speed of the band.

2. The process as claimed in claim 1, characterized in that the tension of the impregnated filament band at take-off from the last spreader surface is at least 50 N per 4000 single filaments.

## Revendications

1. Procédé de fabrication d'un matériau composite renforcé par des fibres, dans lequel, dans un dispositif d'imprégnation destiné à former une bande de fils, un grand nombre de fils continus ayant un diamètre de mono-filament de 7 à 30 micromètres sont disposés en parallèle et tendus, la bande de fibres est tirée sur au moins deux surfaces écarteuses chauffées, et, lors de sa pénétration dans la première surface écarteuse, la bande de fils présente une contrainte de traction de 5 à 50 N pour 4000 monofilaments, et la vitesse de la bande de fils est d'au moins 3 m/min, une masse fondue d'un polymère thermoplastique, qui présente une viscosité, mesurée en présence de faibles vitesses de cisaillement, de 105 à 2500 Pa.s, est amenée dans le dispositif par une ouverture de passage, et on ajuste dans la bande de fils en cours de solidification une teneur en fils continus de 5 à 70 % en volume, caractérisé en ce que la géométrie des surfaces écarteuses est configurée de façon à former un coin avec la bande de fils en cours d'introduction, l'ouverture de passage de la masse fondue et les fils continus ne sont pas en contact l'un avec les autres, et la bande de fils tirée, qui est mise en contact avec la masse fondue, enfonce la masse fondue dans le coin, de sorte que, sous l'effet de la contrainte et de la vitesse de la bande, la masse fondue est enfoncée dans la bande.

2. Procédé selon la revendication 1, caractérisé en ce que la contrainte de traction, lors du tirage de la bande de fils imprégnée à partir de la première surface écarteuse, est d'au moins 50 N par 4000 monofilaments.